# FASCICULE DE BREVET EUROPEEN

(11) **EP 1 730 579 B1**
(45) Date de publication et mention de la délivrance du brevet: **23.02.2011**
(21) Numéro de dépôt: 05744181.8
(22) Date de dépôt: 29.03.2005
(51) Int. Cl.: G02C 7/12, A42B 3/22

(54) **VERRE DE LUNETTES TRANSPARENT ET POLARISANT AYANT UNE ZONE ASSOCIEE A UN FILTRE DE POLARISATION ORIENTE DE FACON OBLIQUE**
TRANSPARENTES UND POLARISIERENDES BRILLENGLAS MIT EINER MIT EINEM SCHRÄG ORIENTIERTEN POLARISATIONSFILTER ASSOZIIERTEN ZONE
TRANSPARENT AND POLARIZING SPECTACLE LENS HAVING A ZONE ASSOCIATED WITH AN OBLIQUELY ORIENTED POLARIZING FILTER

(30) Priorité: 02.04.2004 FR 0403510
(43) Date de publication de la demande: 13.12.2006
(73) Titulaire: ESSILOR INTERNATIONAL (COMPAGNIE GENERALE D'OPTIQUE), 94220 Charenton-le-Pont (FR)
(72) Inventeur: GIRAUDET, Guillaume, F-77340 Pontault-Combault (FR)
(74) Mandataire: Boire, Philippe Maxime Charles
(86) Numéro de dépôt international: PCT/FR2005/000750
(87) Numéro de publication internationale: WO 2005/101099

(56) Documents cités:
- DE-A1- 10 237 684
- US-A- 2 334 446
- US-A- 3 211 047

## Description

La présente invention concerne un élément de vision transparent et polarisant ayant une zone associée à un filtre de polarisation orienté de façon oblique.

US 6,250,759 décrit des verres de lunettes adaptés pour la pratique d'activités de loisir, telles que le golf, la chasse ou la pêche. De tels verres sont divisés en plusieurs zones, dont les caractéristiques de transmission lumineuse sont adaptées en fonction des objets ou du paysage regardé lors de la pratique de ces activités. En particulier, des zones distinctes du verre peuvent présenter des caractéristiques différentes de filtrage de la lumière en fonction d'une polarisation de celle-ci.

US 2,334,446 décrit des verres de lunettes adaptés pour la conduite d'un véhicule. De tels verres sont divisés en plusieurs zones, l'une des zones étant associée à un filtre de polarisation lumineuse, la lumière traversant les verres étant affectée différemment pour deux des zones en fonction d'une direction de polarisation de la lumière, dans lequel l'orientation du filtre de polarisation est oblique par rapport à une direction horizontale dans la position d'usage de l'élément avec un angle distinct de 90 degrés et de 0 degré entre l'orientation du filtre et la direction horizontale.

Le champ de vision d'un conducteur de véhicule, d'un motocycliste ou d'un pilote d'avion présente des caractéristiques particulières. II comprend notamment deux parties distinctes. Une première partie du champ de vision, en général une partie inférieure du champ, est occupée par le tableau de bord du véhicule ou de l'avion. Le tableau de bord incorpore souvent un ou plusieurs écrans d'affichage, par exemple du type affichage à cristaux liquides. De tels écrans d'affichage produisent une lumière dont les caractéristiques de polarisation dépendent des technologies utilisées et des choix ergonomiques des concepteurs des postes de conduite ou de pilotage. II est notamment possible de considérer deux familles de technologie d'affichage qui sont les affichages à matrice passive et les affichages à matrice active. En particulier, l'état d'allumage d'un point d'affichage de l'écran (ou pixel) correspond:
- pour les afficheurs à matrice passive STN (Super twisted nematic), à une émission de lumière polarisée orientée selon un angle de 0 degré;
- pour les afficheurs à matrice passive DSTN (Double super twisted nematic), à une émission de lumière polarisée orientée selon un angle de + 90 degrés;
- pour les afficheurs à matrice active TFT (Thin Film Transistor), à une émission de lumière polarisée orientée selon un angle de +45 degrés.

Les angles précisés précédemment sont donnés par rapport à une direction de référence horizontale. Lorsqu'on fait face à l'observateur, la direction de référence 0 degré est orientée à droite et les angles sont comptés positivement dans le sens trigonométrique.

La seconde partie du champ de vision est occupée par le paysage extérieur, visible au travers du pare-brise ou directement dans le cas d'un motocycliste. Cette seconde partie du champ constitue en général une partie supérieure du champ de vision du conducteur ou du pilote ; elle est donc située au-dessus de la partie du champ de vision occupée par le tableau de bord. La lumière qui provient des éléments extérieurs situés dans cette seconde partie du champ de vision, est le plus souvent non polarisée, c'est-à-dire naturelle ; néanmoins, elle peut également être polarisée suite à une réflexion sur une surface transparente.

La visibilité des écrans d'affichage du tableau de bord constitue un enjeu majeur de la conception des postes de conduite ou de pilotage. En effet, le contraste des écrans d'affichage est atténué par la lumière qui entre dans l'habitacle ou dans le cockpit, ou qui est présente autour d'un conducteur de motocycle, et qui éclaire l'observateur et le tableau de bord. II peut être alors difficile de distinguer les états d'allumage et d'extinction des points d'affichage de l'écran.

Un rebord sombre est souvent disposé au dessus des écrans d'affichage du tableau de bord pour réduire la quantité de lumière ambiante qui éclaire ces écrans. Mais ces rebords sont peu efficaces, inesthétiques et encombrants. En outre, ils peuvent gêner l'accommodation de l'oeil du conducteur ou du pilote lorsqu'il passe du tableau de bord au paysage visible externe, ou inversement du paysage au tableau de bord.

Un but de la présente invention consiste donc à améliorer la perception visuelle des écrans de tableaux de bord et des appareils électroniques embarqués, tels que par exemple, des systèmes de positionnement globale (GPS) ou des écrans de téléphone portable.

Pour cela, l'invention propose un élément de vision transparent et polarisant selon la revendication 1.

Préférentiellement, le filtre polarisant est orienté à 135 degrés. En effet, compte tenu des valeurs d'angle, citées précédemment, de la lumière polarisée émise par les différents types d'afficheurs, un filtre de polarisation orienté à 135 degrés garantit de ne pas avoir une extinction des afficheurs de bords à 0 degré et à 90 degrés, permettant alors leur lecture par le conducteur, et garantit également une perception visuelle accrue des afficheurs de bords à matrice active donnant une lumière polarisée à 45 degrés.

Par verres on comprend toutes lentilles de matière minérale et organique, de composition et sous formes variables s'adaptant à une monture de lunettes pour protéger et/ou corriger la vue, ces verres étant choisis parmi les verres afocaux, unifocaux, bifocaux, trifocaux et progressifs.

On entend par position d'usage de l'élément de vision transparent et polarisant la position de cet élément lorsqu'il est adapté devant les yeux du conducteur ou du pilote, conformément à l'utilisation normale de l'élément, pour une position verticale de sa tête. Par verticale, il est fait référence à la verticale gravitationnelle. Par opposition, par horizontale, il est fait référence à une direction déviant d'un angle de 90 degrés par rapport à la verticale gravitationnelle.

Le centre optique d'un verre, considéré dans la suite, est souvent confondu avec le centre géométrique du verre avant usinage. Plus généralement, le centre optique peut être défini de l'une des façons suivantes:
- le point situé sur la lentille au milieu de deux gravures;
- le point représentant le prisme prescrit au porteur en vision de loin;
- le point matérialisé sur la lentille, avant montage dans la monture, par une croix tracée sur la lentille;
- ou le point par lequel passe l'axe optique de la lentille, l'axe optique représentant la ligne joignant les centres des deux surfaces composant la lentille.

On entend par orientation d'un filtre de polarisation l'orientation du champ électrique d'une lumière incidente pour laquelle l'intensité de la lumière transmise par ce filtre est minimale ou nulle. Dans le cadre de l'invention, on ne considère que des polarisations linéaires de la lumière, ou des composantes linéaires de polarisation lumineuse.

Selon l'invention, un filtre de polarisation orienté obliquement, selon un angle distinct de 90 degrés et de 0 degré, est disposé entre les écrans d'affichage d'un tableau de bord (ou des appareils électroniques embarqués) et les yeux du conducteur ou du pilote. Autrement dit, l'angle d'orientation du filtre par rapport à la direction horizontale, dans la position d'usage de l'élément transparent de vision, est compris strictement entre 0 degré et 90 degrés, ou compris strictement entre 90 degrés et 180 degrés. Un filtre ainsi orienté élimine au moins en partie les composantes de polarisation de la lumière qui sont orientées verticalement ou horizontalement. En particulier, la lumière ambiante réfléchie sur un écran d'affichage est ainsi filtrée avant d'être perçue par l'oeil du conducteur ou du pilote. Les états d'allumage et d'extinction des points d'affichage de l'écran, associés à une polarisation orientée obliquement, sont alors perçus avec un contraste augmenté. L'élimination stricte des angles de valeurs à 0 degré et à 90 degrés garantit de ne pas avoir une extinction des points d'affichage des écrans à matrice passive.

Cette augmentation du contraste est maximale lorsque le filtre de polarisation est orienté perpendiculairement à la direction de polarisation de la lumière émise par un point d'affichage de l'écran à l'état d'allumage. Il est donc avantageux, dans le cas des afficheurs de type TFT, que l'orientation du filtre de polarisation, dans la position d'usage de l'élément de vision transparent et polarisant, a un angle compris entre 125 degrés et 145 degrés par rapport à la direction horizontale ; préférentiellement l'orientation du filtre de polarisation a un angle de 135 degrés garantissant alors la transmission d'une lumière polarisée à 45 degrés.

Selon l'invention, la zone associée au filtre de polarisation orienté de façon oblique est située dans une partie inférieure de l'élément, par rapport à sa position d'usage. La zone de l'élément associée au filtre orienté obliquement correspond alors à la partie du champ de vision du conducteur ou du pilote dans laquelle se trouve le tableau de bord. L'amélioration du contraste des écrans d'affichage perçu par le conducteur ou le pilote est ainsi obtenue pour une position normale de sa tête en position de conduite. Le confort visuel est donc amélioré tout en conservant une position de conduite naturelle.

Selon un mode de réalisation particulier, la zone associée au filtre de polarisation orienté de façon oblique peut être adjacente à un bord inférieur de l'élément de vision transparent et polarisant.

Les inventeurs ont aussi déterminé qu'un bon compromis est obtenu lorsque la zone de l'élément associée au filtre de polarisation orienté de façon oblique présente une limite supérieure qui passe entre un centre optique de l'élément de vision transparent et polarisant et un point situé à 20 millimètres en dessous de ce centre dans la position d'usage dudit l'élément. Plus particulièrement, la limite supérieure de la zone de l'élément associée au filtre de polarisation orienté de façon oblique peut passer entre le centre optique et un point situé à 10 millimètres en dessous de ce centre.

L'une des zones de l'élément, autre que celle associée au filtre de polarisation orienté de façon oblique, peut n'être associée à aucun filtre de polarisation.

L'élément peut aussi comprendre une zone associée à un filtre de polarisation orienté horizontalement par rapport à sa position d'usage. Un reflet constitué de lumière polarisée horizontalement est alors atténué au niveau d'une telle zone. Le risque d'éblouissement du conducteur ou du pilote par de tels reflets est alors diminué. Un tel filtre de polarisation est particulièrement efficace pour éliminer les réverbérations gênantes sur les plans d'eau, sur les revêtements de sols notamment lorsqu'ils sont mouillés, sur le sable, la neige ou la glace.

La zone associée au filtre de polarisation orienté de façon oblique peut être située en dessous de la zone associée au filtre de polarisation orienté horizontalement dans la position d'usage de l'élément. Une telle configuration de la surface optique est particulièrement adaptée aux caractéristiques du champ de vision du conducteur ou du pilote. En effet, les reflets atténués par le filtre orienté horizontalement proviennent du paysage extérieur situé dans la partie supérieure de son champ de vision.

L'élément peut aussi comprendre plus de deux zones. Notamment, il peut comprendre en outre au moins une zone supplémentaire associée à un filtre de polarisation orienté verticalement par rapport à la position d'usage de l'élément. Un reflet constitué de lumière polarisée verticalement est alors atténué au niveau d'une telle zone supplémentaire. Il s'agit notamment de reflets sur des surfaces verticales transparentes, telles que, par exemple, des vitrines ou des fenêtres de voitures. Le risque d'éblouissement du conducteur par ces reflets est alors aussi diminué.

De préférence, la zone supplémentaire, associée à un filtre de polarisation orienté verticalement, est située dans une partie latérale de l'élément par rapport à sa position d'usage. En effet, les reflets sur des parois verticales sont principalement situés dans les parties latérales du champ de vision du conducteur, notamment lorsque ces reflets proviennent de vitrines bordant une route empruntée par le conducteur, ou de vitres de véhicules situés à droite et/ou à gauche du conducteur. Dans le cas où l'élément de vision transparent et polarisant est un verre tel que défini précédemment, ladite zone supplémentaire s'étend sur une largeur allant du bord latérale externe dudit verre jusqu'à une distance comprise entre 5 millimètres (mm) et 75 millimètres (préférentiellement entre 5 mm et 30 mm), mesurée sur une droite allant dudit bord latérale externe vers le centre optique tel que défini précédemment dudit verre.

Eventuellement, l'élément peut comprendre deux zones supplémentaires associées à des filtres de polarisation respectifs orientés verticalement par rapport à sa position d'usage. Les deux zones supplémentaires sont situées dans des parties latérales opposées dudit élément. La protection résultante contre des éblouissements par des reflets sur des parois verticales est ainsi symétrique pour les deux parties latérales droite et gauche du champ de vision du conducteur.

Lesdites deux zones supplémentaires associées à un filtre de polarisation orienté verticalement sont positionnées préférentiellement de façon adjacente à un bord latérale de l'élément optique; elles sont séparées par une distance comprise entre 10 millimètres et 60 millimètres (mm) dans une partie centrale dudit élément lorsque ledit élément optique représente un verre tel que défini précédemment. Préférentiellement la distance comprise entre chacune des zones supplémentaires est comprise entre 10 mm et 40 mm, et très préférentiellement la distance est comprise entre 20 mm et 40 mm dans une partie centrale dudit élément.

L'invention concerne aussi un dispositif de vision incorporant au moins un élément transparent de vision tel que décrit précédemment.

Le dispositif de vision peut comprendre une paire de lunettes. L'élément de vision transparent et polarisant constitue alors un verre de ladite paire de lunettes.

D'autres particularités et avantages de la présente invention apparaîtront dans la description ci-après de trois exemples de réalisation non limitatifs, en référence aux dessins annexés, dans lesquels :
- la figure 1a (fig. 1a) représente une paire de lunettes munie de verres conformément à un premier mode de réalisation de l'invention ;
- la figure 1b (fig. 1 b) illustre une utilisation d'une paire de lunettes conforme à la figure 1a en condition de conduite automobile ;
- la figure 2 (fig. 2) représente un verre de lunettes conformément à un deuxième mode de réalisation de l'invention.
- la figure 3 (fig. 3) représente un casque munie d'une visière oculaire conformément à un autre mode de réalisation qui ne fait pas partie de l'invention.

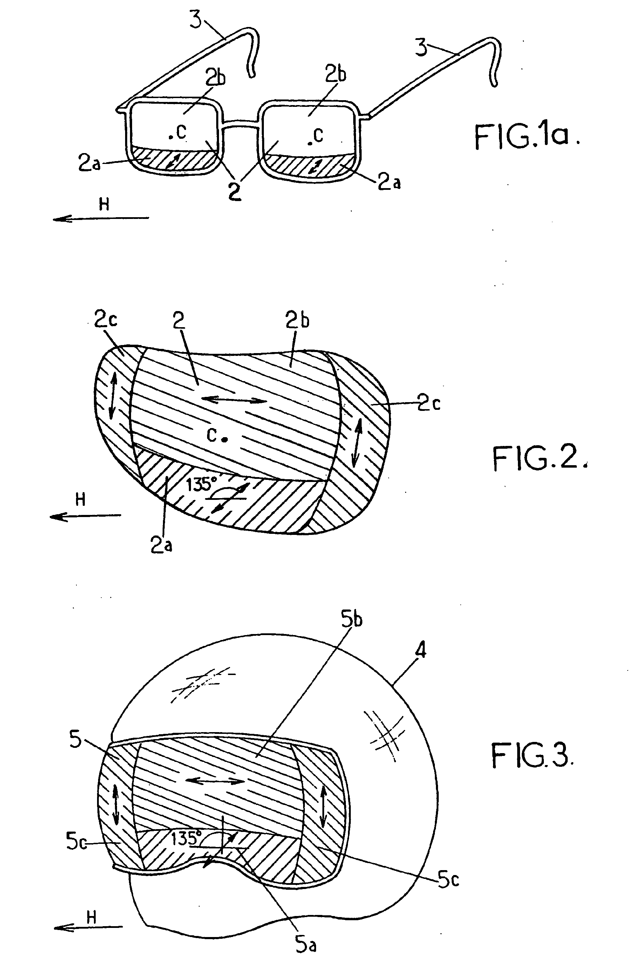

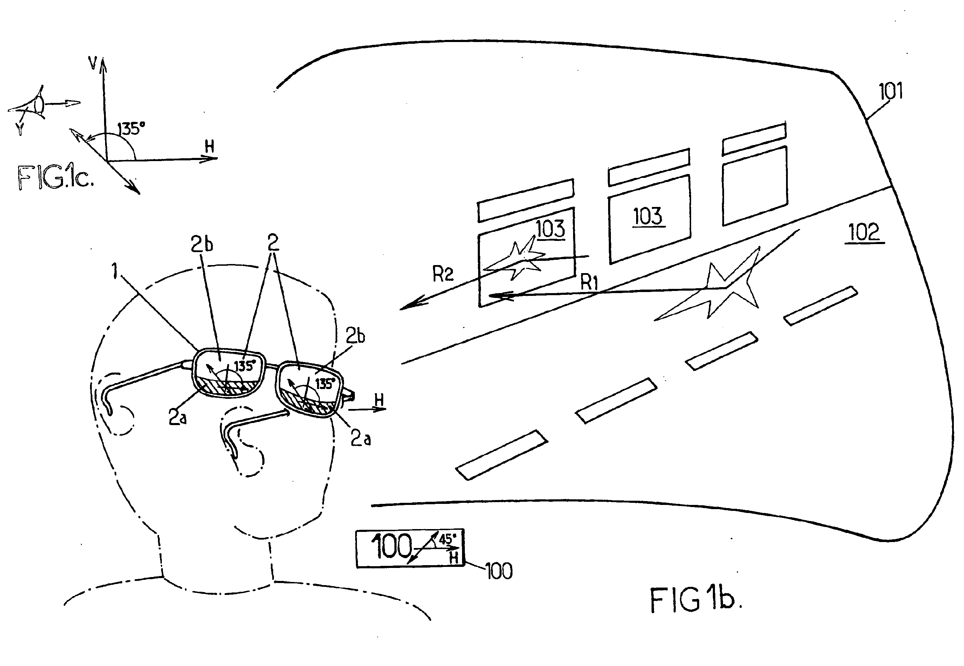

En référence à la figure 1, une paire de lunettes comprend une monture 1 avec deux branches 3, équipée de deux verres 2. Le mot verre est considéré selon son sens usuel tel que défini précédemment.

Un tel verre peut être seulement un support pour un filtre de polarisation. Dans ce cas, les deux faces du verre sont parallèles, de façon à n'introduire aucune distorsion d'image. Ce peut aussi être un verre ayant une activité de correction ophtalmique, quelque soit la nature de la correction (myopie, astigmatisme, hypermétropie, presbytie), et ce peut être un verre afocal, unifocal, bifocal, trifocal ou progressif notamment. Le verre peut encore être associé à d'autres fonctions optiques, tel qu'un verre de protection solaire ou un verre photochrome.

Les verres 2 sont divisés en deux zones, référencées 2a et 2b. La zone 2a est disposée à proximité du bord inférieur de chaque verre, par rapport à la position d'usage de la paire de lunettes. La zone 2b est disposée au dessus de la zone 2a. Elle est située à proximité du bord supérieur de chaque verre 2.

Pour chacun des verres 2, la limite entre les zones 2a et 2b peut passer entre le centre optique du verre, noté C sur la figure 1, et un point situé à 20 millimètres en dessous du centre C. De préférence, elle peut passer à 10 millimètres en dessous du centre C. Une telle position de la limite entre les zones 2a et 2b du verre 2 est particulièrement adaptée aux emplacements des divers éléments présents dans le champ de vision d'un conducteur de véhicule.

La zone 2a de chaque verre est associée à un filtre de polarisation orienté à 135 degrés environ par rapport à une direction horizontale H. L'orientation des filtres est indiquée par une flèche double sur la figure 1. Chaque filtre de polarisation peut être réalisé selon l'une des technologies connues de l'Homme du métier, tel que par exemple par scracthage. Ce peut être un filtre par absorption de la lumière polarisée verticalement ou, éventuellement, un filtre par réflexion de la lumière polarisée verticalement.

Dans ce premier mode de réalisation, la zone 2b de chaque verre 2 est dépourvue de filtre de polarisation.

De la lumière incidente sur la zone 2a de l'un des verres 2 est filtrée en fonction de sa polarisation : elle est absorbée par le filtre si elle est polarisée parallèlement à la direction d'orientation du filtre, alors qu'elle est transmise par le filtre si elle est polarisée perpendiculairement à la direction d'orientation du filtre.

La figure 1b illustre un conducteur automobile portant une paire de lunettes telle que représentée à la figure 1a. Pour raison de clarté, la silhouette du conducteur est dessinée en pointillés. La tête du conducteur fait face au pare-brise 101, au travers duquel la route 102 est visible, ainsi que des éléments du paysage de chaque côté de la route 102, par exemple des vitrines 103. Un écran d'affichage 100, par exemple du type à cristaux liquides à matrice active (tel qu'un GPS), est disposé devant le conducteur, au niveau du tableau de bord du véhicule. Des informations de conduite sont affichées sur l'écran 100, telles que le chemin du véhicule entre son point de départ et son point d'arrivée, en commandant des points d'affichage de l'écran 100 de façon que certains de ces points émettent de la lumière polarisée à 45 degrés. Cette direction de polarisation est repérée par rapport à la direction de référence horizontale H, reportée sur la figure 1 b. La direction H est orientée vers la droite du conducteur.

L'orientation du filtre de polarisation associé à la zone 2a de chacun des verres 2 de la paire de lunettes portée par le conducteur est indiquée sur la figure 1b : chacun des filtres est orienté à 135 degrés par rapport à la direction H, reportée localement au niveau de chaque verre. L'orientation des filtres de polarisation associés à chaque zone 2a est donc perpendiculaire à la direction de polarisation de la lumière émise par l'écran 100. Chaque filtre orienté obliquement élimine la lumière polarisée à 135 degrés par rapport à la direction H, de sorte que le conducteur perçoit essentiellement la lumière polarisée à 45 degrés par rapport à la direction H. Une telle orientation des filtres associés aux zones 2a est par conséquent adaptée pour transmettre plus particulièrement la lumière émise par l'écran 100.

La figure 2 illustre un perfectionnement de l'invention, appliqué à un verre de lunettes 2 utilisable avec la monture 1 décrite précédemment. La flèche indiquée sur la figure 2 indique la direction de référence horizontale H introduite précédemment, orientée de la même façon vers la droite d'un porteur du verre 2.

Le verre 2 comporte les zones 2a et 2b précédentes. La zone 2a est encore associée à un filtre de polarisation orienté à 135 degrés par rapport à la direction H. La zone 2b, disposée au dessus de la zone 2a du verre 2, est associée à un filtre de polarisation orienté horizontalement dans la position d'usage du verre 2, c'est-à-dire parallèlement à la direction H.

II est connu que des reflets sur une surface horizontale transparente sont essentiellement constitués de lumière polarisée horizontalement. De tels reflets peuvent provenir, par exemple, de la surface de la route 102 située devant le conducteur, notamment lorsque la route 102 est mouillée (voir figure 1b). Un tel reflet provoque une gêne visuelle pour le conducteur, et même un éblouissement qui peut être dangereux dans certaines circonstances de conduite. La figure 1b illustre un tel reflet, noté R1. Le reflet R1 est situé dans la partie supérieure du champ de vision du conducteur, qui correspond à la zone 2b de chacun des verres 2 de la paire de lunettes du conducteur. Le filtre de polarisation orienté horizontalement et associé à la zone 2b de chaque verre 2 supprime, sinon diminue, la perception du reflet R1 par le conducteur. Le confort de conduite est donc accru, de même que la sécurité de conduite.

De façon similaire, des reflets sur une surface verticale présentent une polarisation lumineuse verticale. La figure 1b représente un reflet R2 sur une vitrine 103 qui borde la route 102. Le reflet R2 est perçu par le conducteur dans une partie latérale de son champ de vision, lorsqu'il maintient sa tête face à la route. La perception du reflet R2 par le conducteur peut être supprimée, sinon réduite, en aménageant dans chacun des verre 2 au moins une zone latérale associée à un filtre de polarisation orienté verticalement. Le verre 2 représenté sur la figure 2 incorpore deux zones latérales référencées 2c, chacune associée à un filtre de polarisation orienté verticalement. Les deux zones 2c sont situées chacune à proximité de l'un des bords latéraux opposés du verre 2, c'est-à-dire à proximité du bord gauche et du bord droit du verre 2, respectivement. La distance entre les limites respectives des deux zones 2c situées vers le centre C, mesurée à la hauteur du centre C, peut être comprise entre 10 millimètres et 60 millimètres. De préférence, cette distance est comprise entre 20 millimètres et 40 millimètres.

Le verre 2 est ainsi divisée en quatre zones principales distinctes : une zone centrale inférieure 2a associée à un filtre de polarisation orienté à 135 degrés par rapport à la direction H, une zone centrale supérieure 2b associée à un filtre de polarisation orienté horizontalement, et deux zones latérales 2c opposées associées à des filtres de polarisation respectifs orientés verticalement. Ainsi, en utilisant une paire de lunettes équipée de verres tels que représentés à la figure 2, le conducteur voit l'écran 100 avec un contraste optimum, tout en étant protégé à la fois contre des éblouissements provoqués par des reflets sur la surface de la route située devant lui, et contre des reflets sur des parois verticales situées latéralement dans son champ de vision.

En référence à la figure 3, un casque de motocycliste 4 possède une visière 5, par exemple en polyimide. La visière 5 peut être constituée d'une paroi transparente souple. La visière 5 comprend deux zones 5a et 5b situées l'une en dessous de l'autre, respectivement à proximité des bords inférieur et supérieur de la visière 5. La zone 5a est associée à un filtre de polarisation orienté à 135 degrés par rapport à la direction horizontale H. De même que précédemment, la direction H est orientée vers la droite du conducteur, i.e. du motocycliste porteur du casque 4. La visière comprend en outre deux autres zones 5c situées de chaque côté des zones 5a et 5b. Les zones 5c sont associées chacune à un filtre de polarisation orienté verticalement. La visière du casque 4 permet alors de supprimer des reflets formés sur la surface de la route, ou sur des parois verticales situées de chaque côté de la route, lorsqu'elle est utilisée en position de conduite.

Il est entendu que les perfectionnements décrits pour un verre de lunettes en relation aux figures 1a, 1b et 2 peuvent être transposés à la visière 3 de la figure 3.

De multiples variantes peuvent être introduites par rapport aux modes de réalisation décrits ci-dessus.

Parmi elles, les zones de l'élément de vision peuvent être modifiées, par modification de la forme des limites de chaque zone. En particulier, ces limites peuvent être rectilignes ou curvilignes.

## Revendications

1. Elément de vision transparent et polarisant (2) constituant un verre (2) de lunettes, divisé en plusieurs zones (2a-2c), l'une au moins desdites zones (2a-2c) étant associée à un filtre de polarisation lumineuse, la lumière traversant ledit élément étant affectée différemment pour deux desdites zones en fonction d'une direction de polarisation de ladite lumière,
dans lequel l'orientation du filtre de polarisation d'une zone est oblique par rapport à une direction horizontale dans la position d'usage de l'élément (2) avec un angle distinct de 90 degrés et de 0 degré entre l'orientation du filtre et la direction horizontale,
l'élément étant **caractérisé en ce que** la zone associée au filtre de polarisation orienté de façon oblique (2a) est située dans une partie inférieure de la surface optique par rapport à la position d'usage de l'élément (2).

2. Elément selon la revendication 1, **caractérisé en ce que** l'orientation du filtre de polarisation de ladite zone dans la position d'usage de l'élément (2) fait un angle compris entre 125 degrés et 145 degrés avec ladite direction horizontale.

3. Elément selon la revendication 2, **caractérisé en ce que** l'orientation du filtre de polarisation de ladite zone dans la position d'usage de l'élément (2) fait un angle de 135 degrés avec ladite direction horizontale.

4. Elément selon l'une quelconque des revendications 1 à 3, dans lequel la zone associée au filtre de polarisation orienté de façon oblique (2a) est adjacente à un bord inférieur de l'élément.

5. Elément selon l'une quelconque des revendications 1 à 4, dans lequel une limite supérieure de la zone associée au filtre de polarisation orienté de façon oblique (2a) passe entre un centre optique dudit élément (C) et un point situé à 20 millimètres en dessous dudit centre dans la position d'usage de l'élément (2).

6. élément selon la revendication 5, dans lequel une limite supérieure de la zone associée au filtre de polarisation orienté de façon oblique (2a) passe entre le centre optique dudit élément (C) et un point situé à 10 millimètres en dessous dudit centre dans la position d'usage de l'élément (2).

7. Elément selon l'une quelconque des revendications 1 à 6, dans lequel une autre des zones de l'élément (2b) est associée à un filtre de polarisation orienté horizontalement par rapport à la position d'usage de l'élément (2).

8. Elément selon la revendication 7, dans lequel la zone associée au filtre de polarisation orienté de façon oblique (2a) est située en dessous de la zone associée au filtre de polarisation orienté horizontalement (2b) dans la position d'usage de l'élément.

9. Elément selon l'une quelconque des revendications 1 à 8, **caractérisé en ce qu'**il comprend en outre au moins une zone supplémentaire (2c) associée à un filtre de polarisation orienté verticalement par rapport à la position d'usage de l'élément (2).

10. Elément selon la revendication 9, dans lequel ladite zone supplémentaire (2c) est située dans une partie latérale de l'élément par rapport à sa position d'usage.

11. Elément selon la revendication 10, dans lequel ladite zone supplémentaire (2c) s'étend sur une largeur allant du bord latéral externe dudit élément jusqu'à une distance comprise entre 5 mm et 75 mm, mesurée sur une droite allant dudit bord latéral vers le centre optique dudit élément.

12. Elément selon la revendication 11, dans lequel ladite zone supplémentaire s'étend jusqu'à une distance comprise entre 5 mm et 30 mm à partir du bord latéral externe de l'élément.

13. Elément selon la revendication 9 ou 10, comprenant deux zones supplémentaires (2c) associées à des filtres de polarisation respectifs orientés verticalement par rapport à la position d'usage de l'élément (2), lesdites deux zones supplémentaires étant situées dans des parties latérales opposées de l'élément.

14. Elément selon la revendication 13, dans lequel les deux zones supplémentaires sont séparées par une distance comprise entre 10 mm et 60 mm dans une partie centrale dudit élément.

15. Elément selon la revendication 14, dans lequel les deux zones supplémentaires sont séparées par une distance comprise entre 10 mm et 40 mm dans la partie centrale dudit élément.

16. Elément selon la revendication 15, dans lequel les deux zones supplémentaires sont séparées par une distance comprise entre 20 mm et 40 mm dans la partie centrale dudit élément.

17. Dispositif de vision incorporant au moins un élément de vision transparent et polarisant selon l'une quelconque des revendications précédentes.

18. Dispositif de vision selon la revendication 17, comprenant une paire de lunettes.

## Claims

1. A polarizing transparent viewing element (2) constituting a spectacle eyeglass, divided into several zones (2a-2c), at least one of said zones (2a-2c) being associated with a light-polarizing filter, the light passing through said element being affected differently in two of said zones depending on a polarization direction of said light,
wherein the orientation of the light-polarizing filter of a zone is oblique with respect to a horizontal direction in the use position of the element (2) with an angle between the orientation of the filter and the horizontal direction different from 90° and from 0°,
the element being **characterized in that** the zone (2a) associated with the polarizing filter oriented obliquely is located in a lower portion of the optical surface with respect to the use position of the element (2).

2. The element as claimed in claim 1, **characterized in that** the orientation of the polarizing filter of said zone in the use position of the element (2) makes an angle of between 125° and 145° to said horizontal direction.

3. The element as claimed in claim 2, **characterized in that** the orientation of the polarizing filter of said zone in the use position of the element (2) makes an angle of 135° to said horizontal direction.

4. The element as claimed in any one of claims 1 to 3, wherein the zone (2a) associated with the obliquely oriented polarizing filter is adjacent a lower edge of the element.

5. The element as claimed in any one of claims 1 to 4, wherein an upper boundary of the zone (2a) associated with the obliquely oriented polarizing filter passes between an optical center (C) of said element and a point located 20 millimeters below said optical center in the use position of the element (2).

6. The element as claimed in claim 5, wherein the upper boundary of the zone (2a) associated with the obliquely oriented polarizing filter passes between the optical center (C) of said element and a point located 10 millimeters below said optical center in the use position of the element (2).

7. The element as claimed in any one of claims 1 to 6, wherein another one of the zones (2b) of the element is associated with a polarizing filter oriented horizontally with respect to the use position of the element (2).

8. The element as claimed in claim 7, wherein the zone (2a) associated with the obliquely oriented polarizing filter is located, in the use position of the element, below the zone (2b) associated with the horizontally oriented polarizing filter.

9. The element as claimed in any one of claims 1 to 8, **characterized in that** it further includes at least one additional zone (2c) associated with a polarizing filter oriented vertically with respect to the use position of the element (2).

10. The element as claimed in claim 9, wherein said additional zone (2c) is located in a lateral portion of the element with respect to its use position.

11. The element as claimed in claim 10, wherein said additional zone (2c) extends over a width going from the external lateral edge of said element to a point at a distance of between 5 mm and 75 mm therefrom, measured along a straight line going from said lateral edge toward the optical center of said element.

12. The element as claimed in claim 11, wherein said additional zone extends over a distance of between 5 mm and 30 mm, measured along the straight line going from said lateral edge toward the optical center of said element.

13. The element as claimed in claim 9 or 10, comprising two additional zones (2c) associated with respective polarizing filters oriented vertically with respect to the use position of the element (2), said two additional zones being located in opposed lateral portions of the element.

14. The element as claimed in claim 13, wherein the two additional zones are separated by a distance of between 10 mm and 60 mm in a central portion of said element.

15. The element as claimed in claim 14, wherein the two additional zones are separated by a distance of between 10 mm and 40 mm in the central portion of said element.

16. The element as claimed in claim 15, wherein the two additional zones are separated by a distance of between 20 mm and 40 mm in the central portion of said element.

17. A viewing device incorporating at least one polarizing transparent viewing element as claimed in any one of the preceding claims.

18. The viewing device as claimed in claim 17, comprising a pair of spectacles.

## Patentansprüche

1. Transparentes und polarisierendes Sichtelement (2), welches ein Brillenglas (2) bildet und in mehrere Bereiche (2a-2c) geteilt ist, wobei einer der Bereiche (2a-2c) mit einem Lichtpolarisationsfilter verbunden ist, wobei das das Element durchquerende Licht für zwei der Bereiche in Abhängigkeit von einer Polarisationsrichtung des Lichts unterschiedlich beeinflusst wird,
wobei das Polarisationsfilter eines Bereichs in Bezug auf eine horizontale Richtung in der Verwendungsposition des Elements (2) mit einem von 90 Grad und von 0 Grad verschiedenen Winkel zwischen der Ausrichtung des Filters und der horizontalen Richtung schräg ausgerichtet ist,
**dadurch gekennzeichnet, dass** der mit dem schräg ausgerichteten Polarisationsfilter verbundene Bereich (2a) sich in einem unterem Abschnitt der optischen Fläche in Bezug auf die Verwendungsposition des Elements (2) befindet.

2. Element nach Anspruch 1, **dadurch gekennzeichnet, dass** die Ausrichtung des Polarisationsfilters des Bereichs in der Verwendungsposition des Elements (2) einen Winkel zwischen 125 Grad und 145 Grad mit der horizontalen Richtung bildet.

3. Element nach Anspruch 2, **dadurch gekennzeichnet, dass** die Ausrichtung des Polarisationsfilters des Bereichs in der Verwendungsposition des Elements (2) einen Winkel von 135 Grad mit der horizontalen Richtung bildet.

4. Element nach einem der Ansprüche 1 bis 3, wobei der mit dem schräg ausgerichteten Polarisationsfilter verbundene Bereich (2a) einem unteren Rand des Elements benachbart ist.

5. Element nach einem der Ansprüche 1 bis 4, wobei eine obere Grenze des mit dem schräg ausgerichteten Polarisationsfilter verbundenen Bereichs (2a) zwischen einem optischen Zentrum des Elements (C) und einem Punkt verläuft, der sich 20 Millimeter unterhalb des Zentrums befindet in der Verwendungsposition des Elements (2).

6. Element nach Anspruch 5, wobei eine obere Grenze des mit dem schräg ausgerichteten Polarisationsfilter verbundenen Bereichs (2a) zwischen dem optischen Zentrum des Elements (C) und einem Punkt verläuft, der sich 10 Millimeter unterhalb des Zentrums befindet in der Benutzungsposition des Elements (2).

7. Element nach einem der Ansprüche 1 bis 6, wobei ein anderer der Bereiche des Elements (2b) mit einem horizontal in Bezug auf die Benutzungsposition des Elements (2) ausgerichteten Polarisationsfilter verbunden ist.

8. Element nach Anspruch 7, wobei der mit dem schräg ausgerichteten Polarisationsfilter verbundene Bereich (2a) sich unterhalb des mit dem in der Benutzungsposition des Elements horizontal ausgerichteten Polarisationsfilter verbundenen Bereichs (2b) befindet.

9. Element nach einem der Ansprüche 1 bis 8, **dadurch gekennzeichnet, dass** es ferner wenigstens einen zusätzlichen Bereich (2c) umfasst, welcher mit einem vertikal in Bezug auf die Verwendungsposition des Elements (2) ausgerichteten Polarisationsfilter verbunden ist.

10. Element nach Anspruch 9, wobei der zusätzliche Bereich (2c) sich in einem Seitenbereich des Elements in Bezug auf seine Benutzungsposition befindet.

11. Element nach Anspruch 10, wobei der zusätzliche Bereich (2c) sich auf einer Breite von dem Außenseitenrand des Elements bis zu einer Entfernung von zwischen 5 mm und 75 mm erstreckt gemessen entlang einer von dem Seitenrand zu dem optischen Zentrum des Elements verlaufenden Gerade.

12. Element nach Anspruch 11, wobei der zusätzliche Bereich sich bis zu einer Entfernung von zwischen 5 mm und 30 mm von dem Außenseitenrand des Elements erstreckt.

13. Element nach Anspruch 9 oder 10, umfassend zwei zusätzliche Bereiche (2c), welche mit jeweiligen vertikal in Bezug auf die Benutzungsposition des Elements (2) ausgerichteten Polarisationsfiltern verbunden sind, wobei sich die beiden zusätzlichen Bereiche in entgegengesetzten Seitenabschnitten des Elements befinden.

14. Element nach Anspruch 13, wobei die beiden zusätzlichen Bereiche durch einen Abstand von zwischen 10 mm und 60 mm in einem zentralen Abschnitt des Elements getrennt sind.

15. Element nach Anspruch 14, wobei die beiden zusätzlichen Bereiche durch einen Abstand von zwischen 10 mm und 40 mm in dem zentralen Abschnitt des Elements getrennt sind.

16. Element nach Anspruch 15, wobei die beiden zusätzlichen Bereiche durch einen Abstand von zwischen 20 mm und 40 mm in dem zentralen Abschnitt des Elements getrennt sind.

17. Sichtvorrichtung, umfassend wenigstens ein transparentes und polarisierendes Sichtelement nach einem der vorhergehenden Ansprüche.

18. Sichtvorrichtung nach Anspruch 17, umfassend eine Paar Brillengläser.
